# EUROPEAN PATENT APPLICATION

(11) **EP 4 844 209 A2**
(43) Date of publication of application: **25.11.2026**
(21) Application number: 26161750.0
(22) Date of filing: 02.03.2026
(51) Int. Cl.: F02C 7/047, F02C 7/06, F02C 7/12, F02C 7/14

(54) **AIRCRAFT POWERPLANT WITH FLOW REGULATOR ANTI-ICING SYSTEM**

(30) Priority: 28.02.2025 US 202519066323
(71) Applicant: RTX Corporation, Farmington, CT 06032 (US)
(72) Inventor: CLARK, Thomas E., Wells, 04090 (US); YAZICI, Murat, Glastonbury, 06033 (US)
(74) Representative: Dehns

(57) **Abstract**

An aircraft powerplant assembly includes a powerplant component (106; 108; 142), a fluid system (36) and an anti-icing system. The fluid system (36) includes a fluid circuit (144), an air circuit (146) and a heat exchanger (148). The fluid circuit (36) extends through the heat exchanger (148) and services the powerplant component (106; 108; 142) using a working fluid. The air circuit (146) includes a circuit inlet (160), a circuit outlet (162) and a flow regulator (158). The air circuit (146) extends through the heat exchanger (148) from the circuit inlet (160) to the circuit outlet (162). The flow regulator (158) is configured to regulate a flow of air received by the air circuit (146) through the circuit inlet (160) and directed to the heat exchanger (148). The heat exchanger (148) is configured to transfer heat energy from the working fluid flowing in the fluid circuit (144) into the flow of air in the air circuit (146). The anti-icing system is configured to heat the flow regulator (158) to reduce or prevent ice accumulation at the flow regulator (158).

## Description

### BACKGROUND OF THE DISCLOSURE

### 1. Technical Field

This disclosure relates generally to an aircraft and, more particularly, to a working fluid system for a powerplant of the aircraft.

### 2. Background Information

An aircraft powerplant includes various components which utilize fluid cooling and/or lubrication during aircraft powerplant operation. Various fluid cooling and/or lubrication systems and methods are known in the art. While these known cooling and/or lubrication systems and methods have various benefits, there is still room in the art for improvement.

### SUMMARY OF THE DISCLOSURE

According to an aspect of the present disclosure, an assembly is provided for an aircraft powerplant. This assembly includes a powerplant component, a fluid system and an anti-icing system. The fluid system includes a fluid circuit, an air circuit and a heat exchanger. The fluid circuit extends through the heat exchanger and is configured to service the powerplant component using a working fluid. The air circuit includes a circuit inlet, a circuit outlet and a flow regulator. The air circuit extends through the heat exchanger from the circuit inlet to the circuit outlet. The flow regulator is configured to regulate a flow of air received by the air circuit through the circuit inlet and directed to the heat exchanger. The heat exchanger is configured to transfer heat energy from the working fluid flowing in the fluid circuit into the flow of air in the air circuit. The anti-icing system is configured to heat the flow regulator to reduce or prevent ice accumulation at the flow regulator.

According to another aspect of the present disclosure, another assembly is provided for an aircraft powerplant. This assembly includes a compressor section, a combustor section, a turbine section, a core flowpath, a bypass flowpath, an air circuit and an anti-icing system. The core flowpath extends through the compressor section, the combustor section and the turbine section. The bypass flowpath bypasses the compressor section, the combustor section and the turbine section. The air circuit includes a circuit inlet, a circuit outlet, a circuit path and a flow regulator. The circuit inlet fluidly couples the circuit path to the bypass flowpath. The circuit path extends through the flow regulator from the circuit inlet to the circuit outlet. The flow regulator is configured to regulate a flow of air received from the bypass flowpath through the circuit inlet and directed through the circuit path to the circuit outlet. The anti-icing system is configured to heat the flow regulator.

According to still another aspect of the present disclosure, another assembly is provided for an aircraft powerplant. This assembly includes an air circuit and an anti-icing system. The air circuit includes a circuit inlet, a circuit outlet, a circuit path and a flow regulator. The circuit path extends through the flow regulator from the circuit inlet to the circuit outlet. The flow regulator is configured to regulate a flow of air received through the circuit inlet and directed through the circuit path to the circuit outlet. The flow regulator includes a regulator wall and a regulator body. The regulator wall forms a peripheral boundary of the circuit path through the flow regulator. The regulator body is configured to move relative to the regulator wall to regulate the flow of air through the flow regulator. The anti-icing system is configured to heat the regulator wall and/or the regulator body to reduce or prevent ice accumulation in the air circuit at the flow regulator.

The assembly may also include an electric powerplant component and a fluid circuit. The fluid circuit is in thermal communication with the air circuit along the circuit path downstream of the flow regulator. The fluid circuit is configured to cool and/or lubricate the electric powerplant component using a working fluid flowing through the fluid circuit.

The assembly may also include a heat exchanger. The circuit path may extend through the heat exchanger with the heat exchanger disposed along the circuit path between the flow regulator and the circuit outlet.

The assembly may also include a bifurcation structure extending across the bypass flowpath. The circuit inlet may be arranged in an exterior of the bifurcation structure.

The flow regulator may be disposed at the circuit inlet.

The flow regulator may be disposed between and spaced from the circuit inlet and the heat exchanger along the air circuit.

The air circuit may also include a circuit path. The circuit path may extend longitudinally through the flow regulator and the heat exchanger. The flow regulator may include a regulator wall and a regulator body. The regulator wall may form a peripheral boundary of the circuit path at the flow regulator. The regulator body may be configured to move relative to the regulator wall to regulate the flow of air through the flow regulator. The anti-icing system may be configured to heat the regulator wall and/or the regulator body.

The anti-icing system may be configured to heat the regulator wall.

The anti-icing system may be configured to heat the regulator body.

The anti-icing system may be configured to heat the regulator wall and the regulator body.

The regulator body may be configured to translate along an axis.

The regulator body may be configured to pivot about an axis.

The anti-icing system may include one or more electric heating elements. The anti-icing system may be configured to heat the flow regulator using the one or more electric heating elements.

The assembly may also include an electric machine configurable as at least an electric generator during a generator mode of operation. The electric machine may be configured to electrically power the one or more electric heating elements during the generator mode of operation.

The electric machine may be configured as or otherwise include the powerplant component serviced by the fluid circuit.

The assembly may also include an electric machine controller configured to control operation of the electric machine. The electric machine controller may include the powerplant component serviced by the fluid circuit.

The assembly may also include a compressor section, a combustor section, a turbine section and a flowpath. The combustor section may include a combustor. The flowpath may extend through the compressor section, the combustor section and the turbine section. The anti-icing system may be configured to heat the flow regulator using core air bled from the flowpath upstream of the combustor.

The anti-icing system may be configured as or otherwise include a microwave system. The anti-icing system may be configured to heat the flow regulator using the microwave system.

The assembly may also include a turbine engine, an electric machine and an electric machine controller. The turbine engine may include a rotating structure. The electric machine may be operatively coupled to the rotating structure. The electric machine controller may be configured to control operation of the electric machine. The turbine engine or the turbine engine controller may include the powerplant component serviced by the fluid system.

The assembly may also include a compressor section, a combustor section, a turbine section, a core flowpath and a bypass flowpath. The core flowpath may extend through the compressor section, the combustor section and the turbine section. The bypass flowpath may bypass the compressor section, the combustor section and the turbine section. The circuit inlet may fluidly couple the air circuit to the bypass flowpath.

The assembly may also include a vane structure extending across the bypass flowpath. The circuit inlet and/or the circuit outlet arranged with the vane structure.

The fluid circuit may be configured to cool and/or lubricate the powerplant component using the working fluid.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a partial schematic illustration of an aircraft propulsion system.
FIG. 2 is a schematic illustration of a portion of the aircraft propulsion system with an electric machine system, an electrical system and an accessory system.
FIG. 3 is a schematic illustration of a portion of the aircraft propulsion system with a working fluid system.
FIG. 4 is a schematic illustration of a portion of the aircraft propulsion system with the working fluid system having another flow regulator arrangement.
FIGS. 5A and 5B are partial sectional illustrations at an inlet into an air circuit with a rotatable flow regulator body in various arrangements.
FIGS. 6A and 6B are partial sectional illustrations at the inlet into the air circuit with a translatable flow regulator body in various arrangements.
FIG. 7 is a schematic illustration of an anti-icing system with a sensor system, the electrical system and the electric machine system.
FIG. 8 is a schematic illustration of the anti-icing system configured to use compressor bleed air.
FIG. 9 is a schematic illustration of the anti-icing system configured to use a microwave system with susceptors.

### DETAILED DESCRIPTION

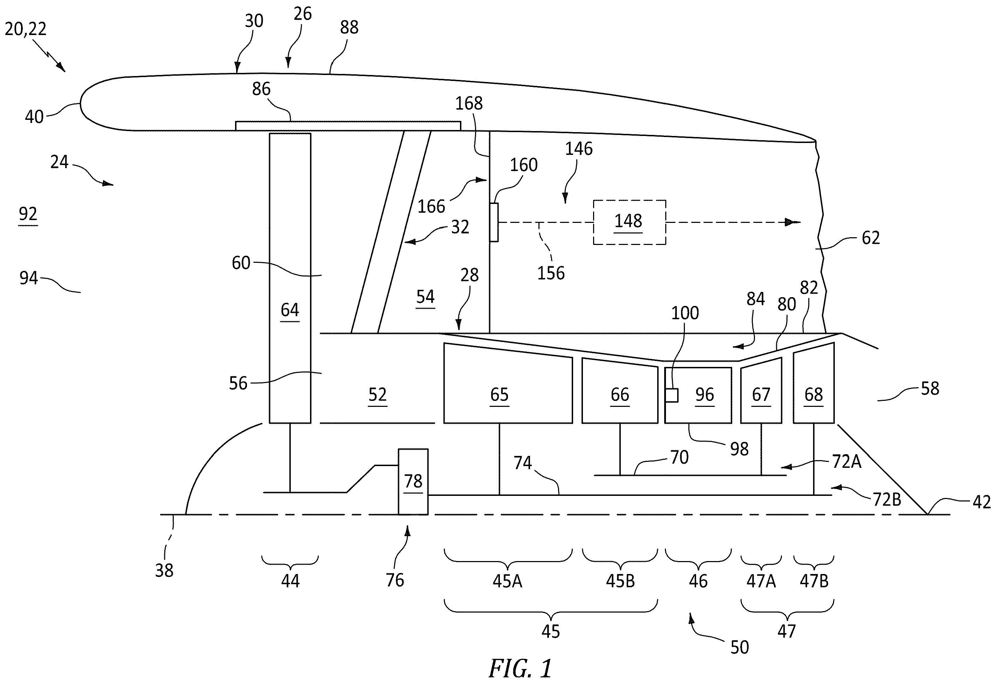

FIG. 1 illustrates a powerplant 20 for an aircraft. The aircraft may be an airplane, a drone (e.g., an unmanned aerial vehicle (UAV)) or any other manned or unmanned aerial vehicle or system. The aircraft powerplant 20 of FIG. 1 is configured as, or otherwise included as part of, a propulsion system 22 for the aircraft. For ease of description, this aircraft propulsion system 22 is described below as a ducted rotor propulsion system such as a turbofan propulsion system. The present disclosure, however, is not limited to such an exemplary aircraft propulsion system. The aircraft propulsion system 22, for example, may alternatively be configured as any other type of ducted or open rotor propulsion system with, for example, an internal bypass flowpath.

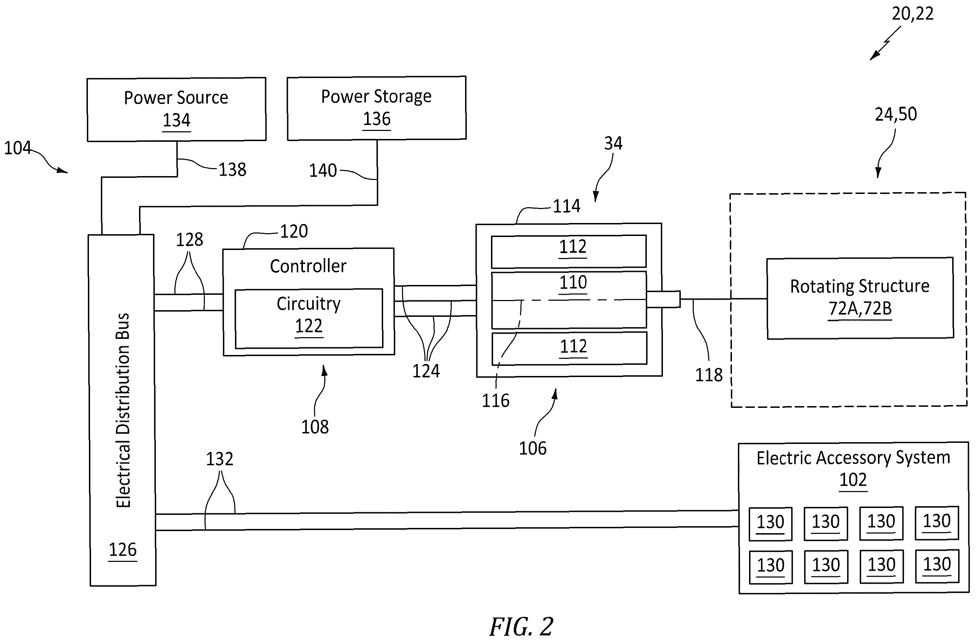

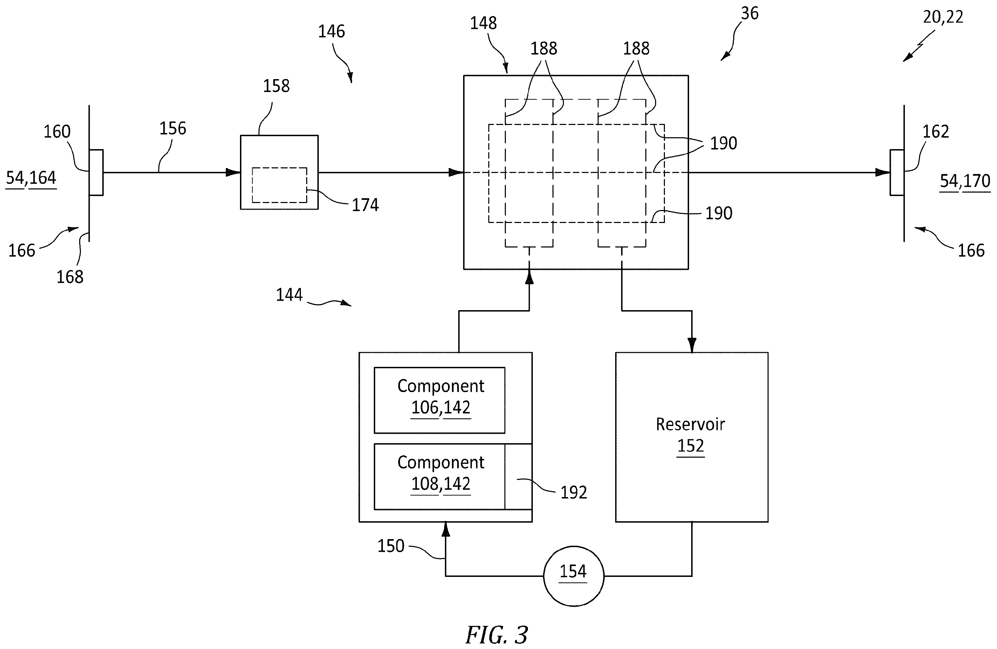

The aircraft propulsion system 22 includes a gas turbine engine 24 (e.g., a turbofan engine) housed within a stationary propulsion system housing 26, which propulsion system housing 26 of FIG. 1 includes an inner housing structure 28, an outer housing structure 30 and a guide vane structure 32 (e.g., a fan exit guide vane (FEGV) structure) extending radially between and connected to the inner housing structure 28 and the outer housing structure 30. The aircraft propulsion system 22 also includes an electric machine system 34 (see FIG. 2) and a working fluid system 36 (see FIG. 3). The aircraft propulsion system 22 extends axially along an axis 38 between an axial upstream, forward end 40 of the aircraft propulsion system 22 and an axial downstream, aft end 42 of the aircraft propulsion system 22. Briefly, the propulsion system axis 38 may be a centerline axis of the aircraft propulsion system 22, the turbine engine 24 and/or one or more of its members. The propulsion system axis 38 may also or alternatively be a rotational axis for one or more members of the turbine engine 24.

The aircraft propulsion system 22 and its turbine engine 24 of FIG. 1 include a propulsor section 44 (e.g., a fan section), a compressor section 45, a combustor section 46 and a turbine section 47. The compressor section 45 of FIG. 1 includes a low pressure compressor (LPC) section 45A and a high pressure compressor (HPC) section 45B. The turbine section 47 of FIG. 1 includes a high pressure turbine (HPT) section 47A and a low pressure turbine (LPT) section 47B. At least (or only) the LPC section 45A, the HPC section 45B, the combustor section 46, the HPT section 47A and the LPT section 47B collectively form a core 50 (e.g., a gas generator) of the turbine engine 24. The aircraft propulsion system 22 and its turbine engine 24 of FIG. 1 also include a core flowpath 52 (e.g., an annular core flowpath) and a bypass flowpath 54 (e.g., an annular bypass flowpath). The core flowpath 52 extends sequentially through the LPC section 45A, the HPC section 45B, the combustor section 46, the HPT section 47A and the LPT section 47B from an airflow inlet 56 into the core flowpath 52 to a combustion products exhaust 58 out from the core flowpath 52. The bypass flowpath 54 extends through a bypass duct from an airflow inlet 60 into the bypass flowpath 54 to an airflow exhaust 62 from the bypass flowpath 54, where the bypass duct may be formed by the inner housing structure 28 and the outer housing structure 30. The bypass flowpath 54 and its bypass duct are configured to bypass (e.g., are disposed radially outboard of and extend along) the engine core 50 and the inner housing structure 28.

The propulsor section 44, the LPC section 45A, the HPC section 45B, the combustor section 46, the HPT section 47A and the LPT section 47B may be arranged sequentially along the propulsion system axis 38 within the propulsion system housing 26. The propulsor section 44 includes a bladed propulsor rotor 64; e.g., a fan rotor. The LPC section 45A includes a bladed low pressure compressor (LPC) rotor 65. The HPC section 45B includes a bladed high pressure compressor (HPC) rotor 66. The HPT section 47A includes a bladed high pressure turbine (HPT) rotor 67. The LPT section 47B includes a bladed low pressure turbine (LPT) rotor 68. Each of these engine rotors 64-68 includes a rotor base (e.g., a disk or a hub) and a plurality of rotor blades (e.g., airfoils, vanes, etc.). The rotor blades may be arranged into one or more stages axially along the respective engine rotor 64-68. The rotor blades in each stage are arranged and may be equispaced circumferentially around the respective rotor base in an annular array. Each of the rotor blades is connected to the respective rotor base. The rotor blades, for example, may be formed integral with or mechanically fastened, welded, brazed and/or otherwise attached to the respective rotor base. Each of the rotor blades projects spanwise (e.g., radially) out from the respective rotor base to a distal tip of the respective rotor blade.

The HPC rotor 66 is coupled to and rotatable with the HPT rotor 67. The HPC rotor 66 of FIG. 1, for example, is connected to the HPT rotor 67 through a high speed shaft 70. At least (or only) the HPC rotor 66, the HPT rotor 67 and the high speed shaft 70 collectively form a high speed rotating structure 72A; e.g., a high speed spool of the turbine engine 24 and its engine core 50. This high speed rotating structure 72A of FIG. 1 and its members 66, 67 and 70 are rotatable about the propulsion system axis 38. However, it is contemplated the high speed rotating structure 72A may alternatively be rotatable about another axis radially and/or angularly offset from the rotational axis of the propulsor rotor 64 and/or the centerline axis of the turbine engine 24.

The LPC rotor 65 is coupled to and rotatable with the LPT rotor 68. The LPC rotor 65 of FIG. 1, for example, is connected to the LPT rotor 68 through a low speed shaft 74. At least (or only) the LPC rotor 65, the LPT rotor 68 and the low speed shaft 74 collectively form a low speed rotating structure 72B; e.g., a low speed spool of the turbine engine 24 and its engine core 50. This low speed rotating structure 72B of FIG. 1 and its members 65, 68 and 74 are rotatable about the propulsion system axis 38. However, it is contemplated the low speed rotating structure 72B may alternatively be rotatable about another axis radially and/or angularly offset from the rotational axis of the propulsor rotor 64 and/or the centerline axis of the turbine engine 24.

The low speed rotating structure 72B is coupled to the propulsor rotor 64 through a propulsor drivetrain 76. The propulsor drivetrain 76 may be configured as a geared drivetrain, where a geartrain 78 (e.g., a transmission, a speed change device, an epicyclic geartrain, etc.) is disposed between and operatively couples the propulsor rotor 64 to the low speed rotating structure 72B and its LPT rotor 68. With this arrangement, the propulsor rotor 64 may rotate at a different (e.g., slower) rotational speed than the low speed rotating structure 72B and its LPT rotor 68. Here, the propulsor rotor 64 and the low speed rotating structure 72B may rotate in a common (the same) direction about the propulsion system axis 38 or in opposite directions about the propulsion system axis 38 depending, for example, upon the specific configuration of the geartrain 78. Alternatively, the propulsor drivetrain 76 may be configured as a direct-drive drivetrain, where the geartrain 78 is omitted. With such an arrangement, the propulsor rotor 64 rotates at a common (the same) rotational speed as the low speed rotating structure 72B and its LPT rotor 68.

The inner housing structure 28 of FIG. 1 includes an inner case 80 (e.g., a core case) for the turbine engine 24, an inner nacelle structure 82 (sometimes referred to as an inner fixed structure (IFS)) and an internal inner housing compartment 84 (e.g., an engine core compartment). The inner case 80 is disposed radially outboard of, extends axially along and may circumscribe one or more or all of the engine sections 45A-47B and the engine rotors 65-68. The inner case 80 may thereby house and provide a support structure for the respective engine sections 45A-47B and the engine rotors 65-68. The inner nacelle structure 82 is configured to provide an aerodynamic cover over the engine core 50 and its inner case 80. At least (or only) the inner housing structure 28 and its inner nacelle structure 82 may collectively form a radial inner peripheral boundary of the bypass flowpath 54. The inner housing compartment 84 of FIG. 1 is formed by and is disposed radially between the inner case 80 and an inner barrel of the inner nacelle structure 82.

The outer housing structure 30 of FIG. 1 includes an outer case 86 (e.g., a fan case) for the turbine engine 24 and an outer nacelle structure 88. The outer case 86 is disposed radially outboard of, extends axially along and may circumscribe the propulsor section 44 and its propulsor rotor 64. The outer case 86 may thereby house and may be configured as a containment structure for the propulsor section 44 and its propulsor rotor 64. The outer nacelle structure 88 is configured to provide an aerodynamic cover over the outer case 86. At least (or only) the outer housing structure 30 and its outer nacelle structure 88 may collectively form a radial outer peripheral boundary of the bypass flowpath 54.

During operation of the aircraft propulsion system 22 of FIG. 1, ambient air from an environment 92 external to the aircraft and its aircraft propulsion system 22 enters the aircraft propulsion system 22 and its turbine engine 24 through an airflow inlet 94. This air is propelled by the rotating propulsor rotor 64 in a downstream, aft direction towards the propulsion system aft end 42.

An outer stream of the air propelled by the rotating propulsor rotor 64 is directed into the bypass flowpath 54 through its bypass inlet 60, which air entering the bypass flowpath 54 may be referred to as "bypass air". The guide vane structure 32 conditions (e.g., straightens out, de-swirls, etc.) the flow of the bypass air within the bypass duct. This conditioned bypass air is subsequently directed out of the aircraft propulsion system 22 through the bypass exhaust 62 to provide forward thrust. The propulsion of the bypass air may account for a majority of the forward thrust generated by the aircraft propulsion system 22 and its turbine engine 24 of FIG. 1.

An inner stream of the air propelled by the rotating propulsor rotor 64 is directed into the core flowpath 52 through its core inlet 56, which air entering the core flowpath 52 may be referred to as "core air". This core air is compressed by the LPC rotor 65 and the HPC rotor 66 and is directed into a combustion chamber 96 (e.g., annular combustion chamber) of a combustor 98 (e.g., annular combustor) in the combustor section 46. Fuel is injected into the combustion chamber 96 by one or more fuel injectors 100 and mixed with the compressed core air to provide a fuel-air mixture. This fuel-air mixture is ignited and combustion products thereof flow through and sequentially drive rotation of the HPT rotor 67 and the LPT rotor 68. The rotation of the HPT rotor 67 and the LPT rotor 68 respectively drive rotation of the HPC rotor 66 and the LPC rotor 65 and, thus, compression of the air received from the core inlet 56. The rotation of the LPT rotor 68 also drives rotation of the propulsor rotor 64 through the propulsor drivetrain 76.

While the turbine engine 24 in FIG. 1 is shown with a particular two rotating structure arrangement, the present disclosure is not limited thereto. For example, the LPC rotor 65 may be omitted to configure the LPT rotor 68 as a power turbine (PT) rotor for the propulsor rotor 64. In another example, the turbine engine 24 may also include another rotating structure; e.g., an intermediate speed spool for the turbine engine 24 and its engine core 50.

Referring to FIG. 2, the electric machine system 34 is electrically coupled to an optional electric accessory system 102 and an electrical system 104 for the aircraft and its aircraft propulsion system 22. The electric machine system 34 of FIG. 2 includes at least (or only) one electric machine 106 and at least (or only) one electric machine (EM) controller 108 for the electric machine 106. For ease of description, the electric machine 106 of FIG. 2 is described below as being electrically coupled to, controlled by and/or otherwise associated with the single, dedicated EM controller 108. However, it is contemplated a single EM controller may alternatively be electrically coupled to, may control and/or may otherwise be associated with multiple electric machines. It is also contemplated multiple EM controllers may be electrically coupled to, may control and/or may otherwise be associated with the single electric machine.

The electric machine of FIG. 2 includes an electric machine rotor 110, an electric machine stator 112 and an electric machine housing 114; e.g., a case. The machine rotor 110 is rotatable about a rotational axis 116 of the machine rotor 110, which electric machine (EM) axis 116 may also be a centerline axis of the electric machine 106. The machine stator 112 of FIG. 2 is radially outboard of and circumscribes the machine rotor 110. With this arrangement, the electric machine 106 is configured as a radial flux electric machine. The electric machine 106 of the present disclosure, however, is not limited to such an exemplary rotor-stator configuration nor to radial flux arrangements. The machine rotor 110, for example, may alternatively be radially outboard of and circumscribe the machine stator 112. In another example, the machine rotor 110 may be axially next to the machine stator 112 configuring the electric machine 106 as an axial flux electric machine. Referring again to FIG. 2, the machine rotor 110 and the machine stator 112 are at least partially or completely housed within an interior of the machine housing 114.

The electric machine 106 may be operatively coupled to a respective one of the engine rotating structures 72A, 72B (generally referred to as "72"). The machine rotor 110 of FIG. 2, for example, is mechanically coupled to and rotatable with the respective engine rotating structure 72 through an engine-electric machine drivetrain 118. This engine-electric machine drivetrain 118 may be configured as or otherwise include a shaft, a tower shaft assembly, an accessory gearbox, an angle gearbox, and/or the like. For ease of description, the machine rotor 110 of FIG. 2 is described below as being coupled to and rotatable with a unique one of the engine rotating structures 72 of the turbine engine 24. However, it is contemplated the machine rotor 110 may alternatively be coupled to and rotatable with multiple engine rotating structures (e.g., 72A and 72B), directly or through another device such as a differential or a clutch system. In addition, while the electric machine 106 is described above as being coupled to the respective engine rotating structure 72, it is contemplated the machine rotor 110 may also or alternatively be operatively coupled to another rotating device through the engine-electric machine drivetrain 118 such as, but not limited to, a pump rotor, an auxiliary compressor rotor, an actuator rotor, or the like.

The electric machine 106 of FIG. 2 may be configurable as an electric motor and/or an electric generator; e.g., an electric motor-generator. For example, during a motor mode of operation, the electric machine 106 may operate as the electric motor to convert electricity received from the aircraft electrical system 104 into mechanical power. The machine stator 112, for example, may generate an electromagnetic field with the machine rotor 110 using a current of electricity received from the aircraft electrical system 104 through the respective EM controller 108. This electromagnetic field may drive rotation of the machine rotor 110. The machine rotor 110, in turn, may provide mechanical power to and drive rotation of the respective engine rotating structure 72 through the engine-electric machine drivetrain 118. This mechanical power may be provided to boost power or completely power the rotation of the respective engine rotating structure 72. By contrast, during a generator mode of operation, the electric machine 106 may operate as the electric generator to convert mechanical power received from the respective engine rotating structure 72 into electricity. Rotation of the machine rotor 110, for example, may be rotationally driven by rotation of the respective engine rotating structure 72 through the engine-electric machine drivetrain 118. The rotation of the machine rotor 110 may generate an electromagnetic field with the machine stator 112, and the machine stator 112 may convert energy from the electromagnetic field into electricity. The electric machine 106 may then provide a current of electricity to the aircraft electrical system 104 through the EM controller 108 for storage and/or further use. The electric machine 106 of the present disclosure, however, is not limited to such exemplary operation. For example, the electric machine 106 may alternatively be configured as a dedicated electric generator; e.g., without the electric motor functionality. In another example, the electric machine 106 may alternatively be configured as a dedicated electric motor; e.g., without the electric generator functionality.

The EM controller 108 includes a controller housing 120 and internal controller circuitry 122. The controller housing 120 may be configured as an enclosed case (e.g., a closed or sealed container) for the respective controller circuitry 122. The controller circuitry 122 is disposed within an interior of the controller housing 120; e.g., an internal chamber or other volume(s) within and enclosed by the controller housing 120. The controller circuitry 122 includes various electrical components, connectors and the like. Examples of the electrical components include, but are not limited to, printed circuit board(s) (PCB(s)), electrical inductor(s), electrical inverter(s), electrical amplifier(s), electrical switch(es) (e.g., contactor(s), relay(s), etc.), processing device(s), memory module(s), communication module(s), electrical transformer(s), electrical rectifier(s), and/or the like.

The EM controller 108 is electrically coupled to the electric machine 106 through one or more electric cables 124; e.g., high voltage electric cables, power feeder cables, etc. More particularly, the controller circuitry 122 of the EM controller 108 is electrically coupled to the electric machine 106 and its machine stator 112 through the electric cables 124. Similarly, the EM controller 108 is electrically coupled to an electrical distribution bus 126 of the aircraft electrical system 104 through one or more electric cables 128; e.g., high voltage electric cables, power feeder cables, etc. More particularly, the controller circuitry 122 of the EM controller 108 is electrically coupled to the aircraft electrical system 104 and its electrical distribution bus 126 through the electric cables 128.

The EM controller 108 and its controller circuitry 122 are configured to control operation of the electric machine 106. For example, when operating as the electric motor, the EM controller 108 and its controller circuitry 122 are configured to regulate a flow of electricity from the aircraft electrical system 104 to the electric machine 106. This electricity flow regulation may include: (a) turning-on the flow of electricity from the aircraft electrical system 104 to the electric machine 106 (e.g., electrically coupling the electric machine 106 to the aircraft electrical system 104); (b) turning-off the flow of electricity from the aircraft electrical system 104 to the electric machine 106 (e.g., electrically decoupling the electric machine 106 from the aircraft electrical system 104); (c) moderating the flow of electricity from the aircraft electrical system 104 to the electric machine 106. Here, each EM controller 108 operates as a motor controller. In another example, when operating as the electric generator, each EM controller 108 and its controller circuitry 122 are configured to regulate a flow of electricity from the electric machine 106 to the aircraft electrical system 104. This electricity flow regulation may include: (a) turning-on the flow of electricity from the electric machine 106 to the aircraft electrical system 104 (e.g., electrically coupling the electric machine 106 to the aircraft electrical system 104); (b) turning-off the flow of electricity from the electric machine 106 to the aircraft electrical system 104 (e.g., electrically decoupling the electric machine 106 from the aircraft electrical system 104); (c) moderating the flow of electricity from the electric machine 106 to the aircraft electrical system 104. Here, the EM controller 108 operates as a generator controller.

The electric accessory system 102 includes one or more electric devices 130. The electric devices 130 may include one or more electric actuators, one or more electric pumps, one or more electric valves and/or one or more fluid separator(s) (e.g., de-oiler(s)). The electric actuator(s) may include one or more electric linear actuators and/or one or more electric rotary actuators. The electric pump(s) may include one or more electric liquid pumps and/or one or more electric gas pumps (e.g., electric air compressor(s)). The electric devices 130 of FIG. 2 may be configured as part of one or more sub-systems for the aircraft propulsion system 22 and its turbine engine 24. Examples of these sub-systems include, but are not limited to: a fuel system for delivering the fuel to the fuel injectors 100 (see FIG. 1); a lubrication system for delivering lubricant (e.g., oil) to one or more lubricated components (e.g., bearing(s), gear system(s), seal system(s), etc.) of the aircraft propulsion system 22 and its turbine engine 24; a cooling system for delivering coolant (e.g., liquid coolant, air, etc.) to one or more fluid cooled components of the aircraft propulsion system 22 and its turbine engine 24; and an actuation system for moving one or more adjustable components (e.g., variable guide vanes, a variable area nozzle, etc.) of the aircraft propulsion system 22 and its turbine engine 24. One, some or all of these sub-systems may be discrete (e.g., operationally, mechanically, fluidly, etc. independent) from one another. Alternatively, some of the sub-systems may be integrated to share, for example, a common working fluid such as the lubricant or the fuel. The present disclosure, however, is not limited to the foregoing exemplary electric devices or sub-systems which may include those electric devices.

Each electric device 130 is electrically coupled to the electrical distribution bus 126 of the aircraft electrical system 104 through one or more electric cables 132 (collectively schematically shown); e.g., high voltage electric cables, low voltage electric cables, power feeder cables, etc. Each electric device 130 may thereby receive a current of electricity from the aircraft electrical system 104 to power operation thereof.

The aircraft electrical system 104 includes the electrical distribution bus 126. This aircraft electrical system 104 may also include a power source 134 and/or a power storage 136. The electrical distribution bus 126 is electrically coupled to the electric machine 106 through the EM controller 108. The electrical distribution bus 126 is electrically coupled to each of the electric devices 130. The electrical distribution bus 126 is also electrically coupled to the power source 134 and the power storage 136, respectively schematically shown via lines 138 and 140. With this arrangement, the electrical distribution bus 126 provides an intermediate connection between the various electrical aircraft propulsion system members 106 (via 108), 130, 134 and/or 136. The power source 134 may be an electric generator powered by the turbine engine 24 or an electric generator powered by another aircraft powerplant; e.g., an engine of a companion aircraft propulsion system, an engine of an auxiliary power unit (APU), a fuel cell system, etc. The power storage 136 is configured to receive electricity from the electrical distribution bus 126 for storage. The power storage 136 is also configured to provide the stored electricity to the electrical distribution bus 126. The power storage 136, for example, may be configured as or otherwise include one or more electricity storage devices; e.g., batteries, super capacitors, etc. With the foregoing aircraft electrical system arrangement, the electrical current provided to one, some or all of the electric devices 130 may be received, through the electrical distribution bus 126, from any one, some or all of the electrical aircraft propulsion system members 106, 134 and/or 136.

Referring to FIG. 3, the working fluid system 36 is configured to service (e.g., cool and/or lubricate) one or more components 142 of the aircraft powerplant 20 and its aircraft propulsion system 22. The working fluid system 36 of FIG. 3, for example, is configured as a heat exchange and/or lubrication system for the powerplant components 142. For ease of description, the powerplant components 142 are described below as including at least (or only) the electric machine 106 and/or the EM controller 108. The working fluid system 36 of the present disclosure, however, is not limited to such an exemplary arrangement. For example, the powerplant components 142 may also or alternatively include one or more additional electric machines (e.g., electric motor(s), electric generator(s), electric motor-generator(s)) and/or electric machine controllers (e.g., motor controller(s), generator controller (s), motor-generator controller (s)). The powerplant components 142 may also or alternatively include one or more components of the turbine engine 24 and its engine core 50 (see FIG. 1). Examples of these engine components include, but are not limited to, engine bearing(s) supporting the low speed rotating structure 72B (see FIG. 1), engine bearing(s) supporting the high speed rotating structure 72A (see FIG. 1), engine bearing(s) supporting the propulsor rotor 64 (see FIG. 1), internal component(s) of and/or support components for the geartrain 78 (see FIG. 1), internal component(s) of and/or support components for the engine-electric machine drivetrain(s) 118 (see FIG. 2), lubricated seal member(s), and/or engine heat exchanger(s). Referring again to FIG. 3, the working fluid system 36 includes a (e.g., closed loop) system fluid circuit 144, a (e.g., open loop) system air circuit 146 and a heat exchanger 148.

The system fluid circuit 144 is configured to cool and/or lubricate the powerplant components 142. The system fluid circuit 144 includes a fluid circuit path 150, a fluid circuit portion of the heat exchanger 148, a fluid circuit reservoir 152 and a fluid circuit pump 154. Of course, it is contemplated the system fluid circuit 144 may (or may not) also include one or more additional components arranged along the fluid circuit path 150 such as, but not limited to, filter(s), sensor(s), additional heat exchanger(s), additional powerplant component(s), valve(s), pump(s), etc. The heat exchanger 148, the fluid circuit reservoir 152 and the fluid circuit pump 154 are arranged inline along the fluid circuit path 150. The fluid circuit path 150 of FIG. 3, for example, extends serially through the heat exchanger 148, the fluid circuit reservoir 152 and the fluid circuit pump 154 in a closed loop. The fluid circuit path 150 of FIG. 3 is also (a) fluidly coupled to and may extend in series or in parallel through and/or (b) may be otherwise arranged in thermal communication with the powerplant components 142. Note, while the powerplant components 142 are shown as being upstream of the heat exchanger 148 along the fluid circuit path 150, it is contemplated one or more or all of these powerplant components 142 may alternatively be downstream of the heat exchanger 148 along the fluid circuit path 150. In addition or alternatively, while the fluid circuit reservoir 152 is shown as being downstream of the heat exchanger 148 along the fluid circuit path 150, it is contemplated the fluid circuit reservoir 152 may alternatively be upstream of the heat exchanger 148 along the fluid circuit path 150. The present disclosure therefore is not limited to the exemplary system fluid circuit arrangement shown in FIG. 3.

The fluid circuit reservoir 152 is configured to contain a quantity of a working fluid before, during and/or after fluid system operation. The fluid circuit reservoir 152, for example, may be configured as or otherwise include a tank, a cylinder, a pressure vessel, a bladder or any other type of (e.g., liquid) storage container. The working fluid stored within the fluid circuit reservoir 152 (and circulated through the system fluid circuit 144 and its fluid circuit path 150) may be a liquid working fluid such as lubricant, coolant, hydraulic fluid and/or the like.

The fluid circuit pump 154 of FIG. 3 is configured to direct and/or regulate a flow of the working fluid through the fluid circuit path 150 from an outlet from (e.g., a supply of) the fluid circuit reservoir 152, through the powerplant components 142 and the heat exchanger 148, to an inlet into (e.g., a return of) the fluid circuit reservoir 152.

The system air circuit 146 is configured to cool the working fluid flowing (e.g., circulating) through the system fluid circuit 144 and its fluid circuit path 150. The system air circuit 146 includes an air circuit path 156, an air circuit flow regulator 158 and an air circuit portion of the heat exchanger 148. Of course, it is contemplated the system air circuit 146 may (or may not) also include one or more additional components arranged along the air circuit path 156 such as, but not limited to, filter(s), sensor(s), additional heat exchanger(s), etc. The air circuit flow regulator 158 and the heat exchanger 148 are arranged inline along the air circuit path 156. The air circuit path 156 of FIG. 3, for example, extends serially through the air circuit flow regulator 158 and the heat exchanger 148 from an airflow inlet 160 into the system air circuit 146 and its air circuit path 156 to an airflow outlet 162 from the system air circuit 146 and its air circuit path 156.

An air source 164 such as the bypass flowpath 54 is fluidly coupled to the system air circuit 146 and its air circuit path 156 through the air circuit inlet 160. The air circuit inlet 160, for example, may be formed by, disposed in and/or otherwise configured with an exterior of a vane structure such as a bifurcation structure 166; e.g., an upper or lower bifurcation structure. Briefly, referring to FIG. 1, the bifurcation structure 166 extends radially across the bypass flowpath 54 from the inner housing structure 28 and its inner nacelle structure 82 to the outer housing structure 30 and its outer nacelle structure 88. The bifurcation structure 166 may thereby bifurcate a longitudinal section of the bypass flowpath 54. The air circuit inlet 160 may be disposed at (e.g., on, adjacent or proximate) or about a leading edge 168 of the bifurcation structure 166. Alternatively, the air circuit inlet 160 may be disposed along a side of the bifurcation structure 166. The present disclosure, however, is not limited to such exemplary air circuit inlet locations. The air circuit inlet 160, for example, may alternatively be disposed at or about the inner peripheral boundary or the outer peripheral boundary of the bypass flowpath 54. Still alternatively, it is contemplated the air circuit inlet 160 may fluidly couple the system air circuit 146 and its air circuit path 156 to (a) another internal volume (e.g., flowpath, etc.) within the aircraft propulsion system 22 and/or (b) a volume external to the aircraft propulsion system 22 such as the external environment 92 where the air circuit inlet 160 is, for example, a ram air scoop.

Referring to FIG. 3, an air sink 170 such as the bypass flowpath 54 is fluidly coupled to the system air circuit 146 and its air circuit path 156 through the air circuit outlet 162. The air circuit outlet 162, for example, may be formed by, disposed in and/or otherwise configured with the exterior of a vane structure such as the bifurcation structure 166. The air circuit outlet 162 may be disposed at (e.g., on, adjacent or proximate) or about a trailing edge of the bifurcation structure 166, along a side (or the side) of the bifurcation structure 166 or otherwise downstream of the air circuit inlet 160 along the bypass flowpath 54. The present disclosure, however, is not limited to such exemplary air circuit outlet locations. The air circuit outlet 162, for example, may alternatively be disposed at or about the inner peripheral boundary or the outer peripheral boundary of the bypass flowpath 54. Still alternatively, it is contemplated the air circuit outlet 162 may fluidly couple the system air circuit 146 and its air circuit path 156 to (a) another internal volume (e.g., passage, flowpath, cavity, etc.) within the aircraft propulsion system 22 such as the inner housing compartment 84 (see FIG. 1) and/or (b) a volume external to the aircraft propulsion system 22 such as the external environment 92 (see FIG. 1).

The air circuit flow regulator 158 is configured to regulate a flow of air (e.g., pressurized air such as bled bypass air) (a) received by the system air circuit 146 and its air circuit path 156 through the air circuit inlet 160 and/or (b) directed downstream through the system air circuit 146 and its air circuit path 156 to the heat exchanger 148. The air circuit flow regulator 158, for example, may be configured as or otherwise include a flow diverter, a switching valve or a valve system. When the air circuit flow regulator 158 is in an open arrangement, the flow of air may pass substantially unimpeded through the air circuit flow regulator 158 downstream to the heat exchanger 148. When the air circuit flow regulator 158 is in a closed arrangement, the air circuit flow regulator 158 may fluidly cut off the flow of air through the air circuit flow regulator 158 downstream to the heat exchanger 148 (or reduce the flow of air through the air circuit flow regulator 158 to a minimum value). Of course, the air circuit flow regulator 158 may (or may not) also be configurable in one or more intermediate arrangements (e.g., partially open or closed arrangements) where the air circuit flow regulator 158 meters the flow of air through the air circuit flow regulator 158 downstream to the heat exchanger 148.

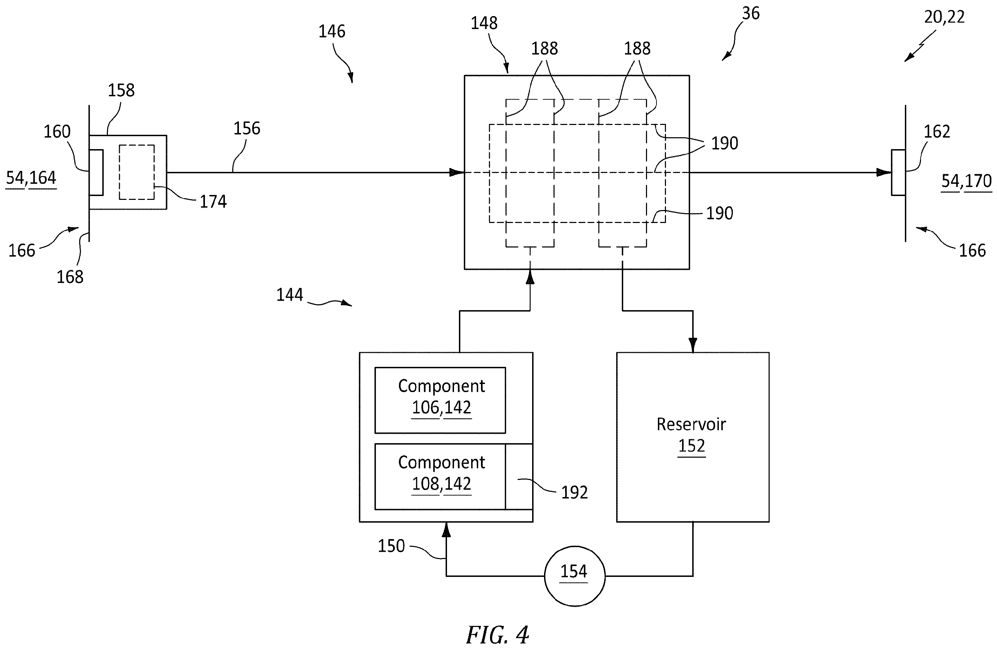

The air circuit flow regulator 158 may be disposed longitudinally between the air circuit inlet 160 and the heat exchanger 148 along the air circuit path 156. The air circuit flow regulator 158 of FIG. 3, for example, is (e.g., slightly) longitudinally spaced downstream from the air circuit inlet 160 along the air circuit path 156. This air circuit flow regulator 158 is also longitudinally spaced upstream from the heat exchanger 148 along the air circuit path 156. The present disclosure, however, is not limited to such an exemplary air circuit flow regulator location. For example, referring to FIG. 4, the air circuit flow regulator 158 may be disposed at and may form the air circuit inlet 160.

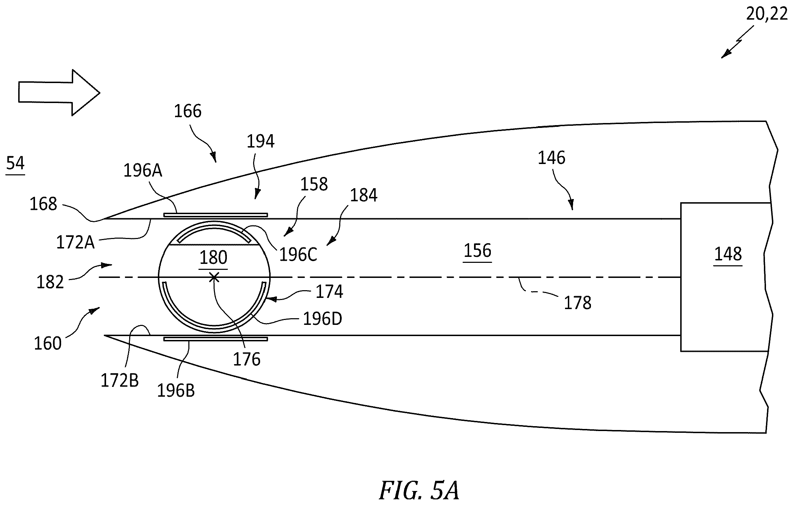

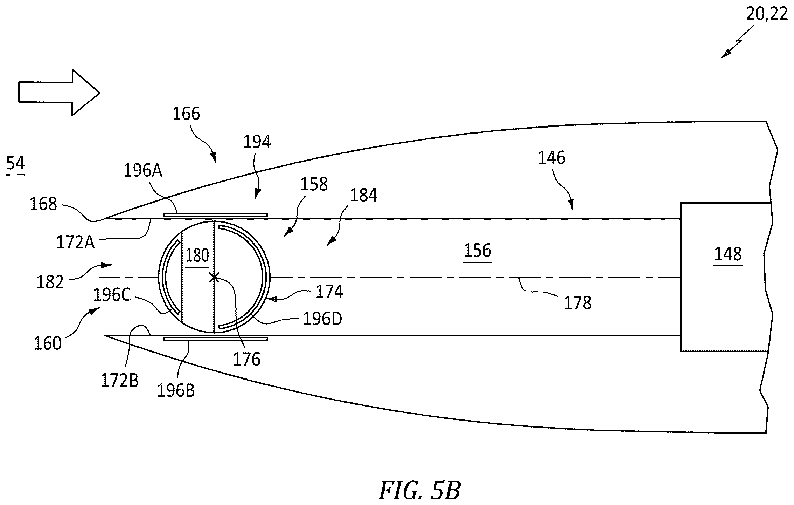

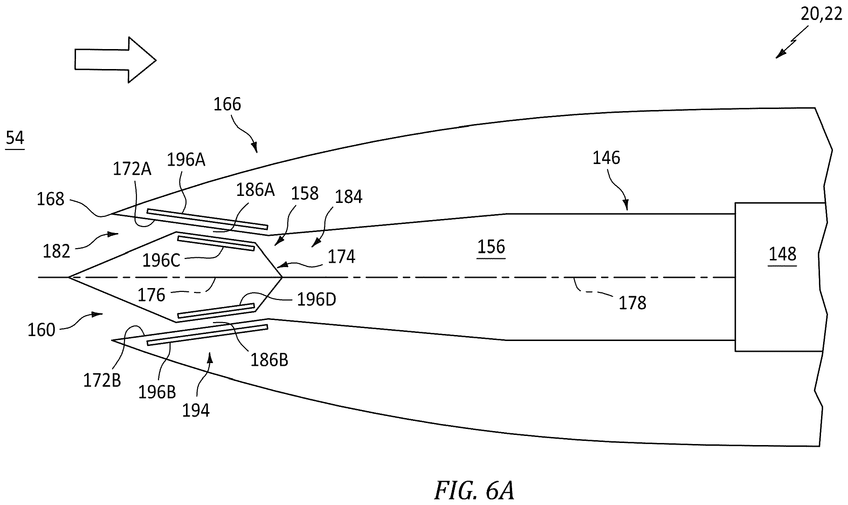

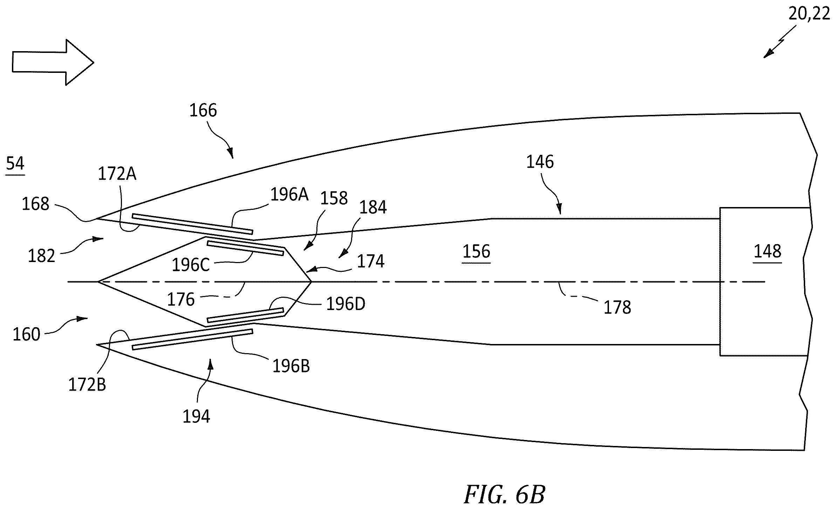

Referring to FIGS. 5A and 5B and FIGS. 6A and 6B, the air circuit flow regulator 158 may include one or more (e.g., stationary) regulator walls 172A and 172B (generally referred to as "172") and a (e.g., moveable) regulator body 174. The regulator walls 172 may form respective laterally opposing flowpath walls of the air circuit path 156 at least (or only) at the air circuit flow regulator 158. The regulator body 174 of FIGS. 5A-6B is disposed laterally between the regulator walls 172. This regulator body 174 is configured to move relative to the regulator walls 172 between the flow regulator open arrangement (e.g., see FIGS. 5A and 6A) and the flow regulator closed arrangement (e.g., see FIGS. 5B and 6B) to regulate the flow of air through the air circuit flow regulator 158. Examples of this regulator body movement are described below with respect to FIGS. 5A and 5B and FIGS. 6A and 6B. The present disclosure, however, is not limited to such exemplary types of regulator body movement nor to such exemplary air circuit flow regulator configurations.

In some embodiments, referring to FIGS. 5A and 5B, the regulator body 174 may be configured to pivot, rotate and/or otherwise move about an actuation axis 176 of the regulator body 174. This actuation axis 176 of FIGS. 5A and 5B is angularly offset from (e.g., perpendicular to) a longitudinal centerline 178 of the air circuit path 156. The regulator body 174 of FIGS. 5A and 5B includes an internal regulator passage 180. With the air circuit flow regulator 158 in its open arrangement of FIG. 5A, the regulator body 174 is positioned such that its regulator passage 180 forms a section of the air circuit path 156 through the air circuit flow regulator 158. More particularly, the regulator passage 180 fluidly couples a section 182 of the air circuit path 156 upstream of the regulator body 174 to a section 184 of the air circuit path 156 downstream of the regulator body 174. By contrast, with the air circuit flow regulator 158 in its closed arrangement of FIG. 5B, the regulator body 174 is positioned such that its regulator passage 180 is fluidly decoupled from the upstream section 182 of the air circuit path 156 and/or the downstream section 184 of the air circuit path 156. A solid portion of the regulator body 174 thereby blocks the flow of air from the upstream section 182 of the air circuit path 156 to the downstream section 184 of the air circuit path 156.

In some embodiments, referring to FIGS. 6A and 6B, the regulator body 174 may be configured to translate and/or otherwise move along its actuation axis 176. This actuation axis 176 of FIGS. 6A and 6B is parallel (e.g., coaxial) with the longitudinal centerline 178 of the air circuit path 156. The regulator body 174 of FIGS. 6A and 6B is configured as or otherwise includes a center plug moveable (e.g., translatable) along the actuation axis 176. With the air circuit flow regulator 158 in its open arrangement of FIG. 6A, the regulator body 174 is positioned such that the air may flow through the air circuit flow regulator 158 longitudinally along the regulator body 174 and one or more of the regulator walls 172. For example, a first passage 186A may be formed by and extend laterally between the first regulator wall 172A and the regulator body 174. A second passage 186B may be formed by and extend laterally between the second regulator wall 172B and the regulator body 174. Each of these passages 186A, 186B may fluidly couple the upstream section 182 of the air circuit path 156 to the downstream section 184 of the air circuit path 156. By contrast, with the air circuit flow regulator 158 in its closed arrangement of FIG. 6B, a first side of the regulator body 174 may be abutted against the first regulator wall 172A to close the first passage 186A (see FIG. 6A). Similarly, a second side of the regulator body 174 may be abutted against the second regulator wall 172B to close the second passage 186B (see FIG. 6A). The regulator body 174 may thereby plug the section of the air circuit path 156 in the air circuit flow regulator 158.

Referring to FIGS. 3 and 4, the heat exchanger 148 includes one or more internal fluid circuit passages 188 and one or more internal air circuit passages 190. Each of these circuit passages 188, 190 may be partially or completely formed by the heat exchanger 148. Each of the circuit passages 188, 190 also extends within and/or through the heat exchanger 148. The fluid circuit passages 188 may form at least a section of or may otherwise be fluidly coupled inline with the fluid circuit path 150. The air circuit passages 190 may form at least a section of or may otherwise be fluidly coupled inline with the air circuit path 156. The fluid circuit passages 188 are fluidly discrete from the air circuit passages 190 within the heat exchanger 148. Within the heat exchanger 148, the fluid circuit passages 188 and the air circuit passages 190 may be arranged to configure the heat exchanger 148 as a crossflow heat exchanger, a counterflow heat exchanger, a parallel flow heat exchanger, or a hybrid heat exchanger with a combination crossflow, counterflow and/or parallel flow arrangement.

During operation of the working fluid system 36 of FIG. 3, the fluid circuit pump 154 directs (e.g., pumps) relatively cool working fluid out of the fluid circuit reservoir 152, through the fluid circuit path 150, into at least one of the powerplant components 142 (e.g., the electric machine 106) and/or into a heat exchanger 192 (e.g., cooling plate) in thermal communication with at least one of the powerplant components 142 (e.g., the EM controller 108). As the working fluid flows through the respective powerplant components 142 (e.g., the electric machine 106) and/or the heat exchanger 192 in thermal communication with the respective powerplant component 142 (e.g., the EM controller 108), heat energy generated by the powerplant components 142 (e.g., the electric machine 106 and/or the EM controller 108) may be transferred into the working fluid. The heat energy transfer may thereby dissipate the heat energy in (e.g., cool) the powerplant components 142 (e.g., the electric machine 106 and/or the EM controller 108) while also heating the working fluid. The working fluid may also lubricate one or more internal components within at least one of the powerplant components 142 (e.g., the electric machine 106). The now heated working fluid is directed away from the powerplant components 142 (e.g., the electric machine 106 and/or the EM controller 108), through the fluid circuit path 150, to the heat exchanger 148. Within the heat exchanger 148, at least some or all of the heat energy previously transferred into the working fluid from the powerplant components 142 (e.g., the electric machine 106 and/or the EM controller 108) is transferred out of the working fluid into the air flowing through the system air circuit 146, thereby cooling the working fluid. The now cooled working fluid is directed from the heat exchanger 148, through the fluid circuit path 150, back into the fluid circuit reservoir 152 for subsequent recirculation. Concurrently, the air that was heated through the heat exchanger 148 is exhausted from the system air circuit 146 into the bypass flowpath 54 through the air circuit outlet 162. Of course, as cooling requirements for the working fluid change (e.g., as a temperature of the working fluid increases or decreases), the air circuit flow regulator 158 may be actuated to control how much of the air is directed to the heat exchanger 148 and, thus, is available for the foregoing heat exchange process.

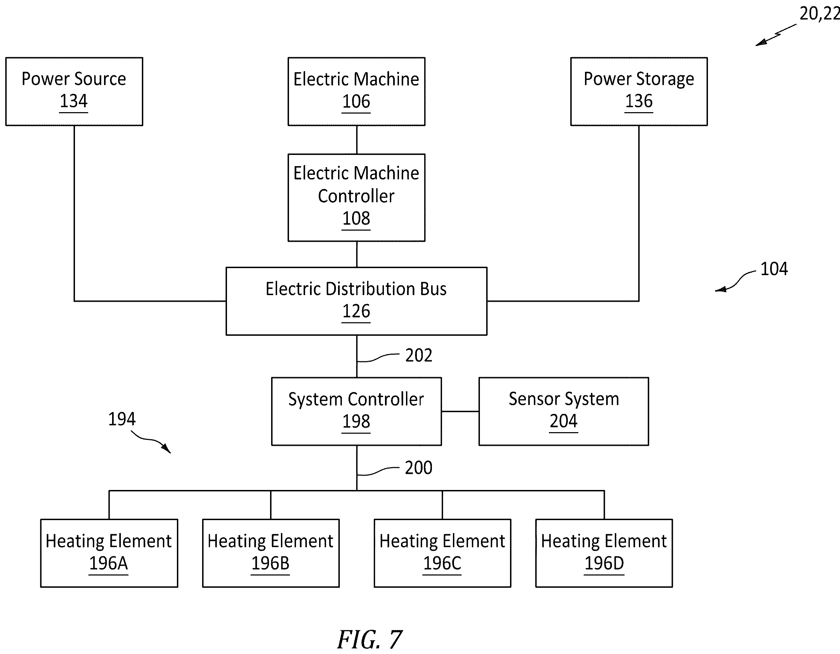

Under certain conditions, a region proximate the air circuit flow regulator 158 may be susceptible to icing. For example, moisture in the bypass air directed into the system air circuit 146 through the air circuit inlet 160 may impact against various surfaces of the air circuit flow regulator 158; e.g., exposed surfaces of the regulator walls 172 of FIGS. 5A-6B and/or exposed surfaces of the regulator body 174 of FIGS. 5A-6B. This moisture may freeze to the surfaces of the air circuit flow regulator 158, thereby accumulating ice buildup at the air circuit flow regulator 158. Such ice buildup may decrease flow area through the air circuit flow regulator 158 (e.g., when in the open arrangement). Such ice buildup may also or alternatively negatively disrupt operation of the air circuit flow regulator 158; e.g., prevent movement of the regulator body 174 of FIGS. 5A-6B. The aircraft propulsion system 22 of FIGS. 5A-6B thereby further includes an anti-icing system 194 for the system air circuit 146 and its air circuit flow regulator 158 (see also FIG. 7).

The anti-icing system 194 is configured to heat a region of the system air circuit 146 at and/or about the air circuit flow regulator 158. The anti-icing system 194 of FIGS. 5A-6B, for example, is configured with one or more heating elements 196A-D (generally referred to as "196"); e.g., electric heating elements. These heating elements 196 may be arranged with and/or otherwise thermally coupled to one or more members of the system air circuit 146 and its air circuit flow regulator 158. The first regulator wall 172A, for example, may be configured with or otherwise thermally coupled to the first wall heating element 196A. The second regulator wall 172B may be configured with or otherwise thermally coupled to the second wall heating element 196B. The regulator body 174 may be configured with or otherwise thermally coupled to the first body heating element 196C and/or the second body heating element 196D. Each of the heating elements 196 of FIGS. 5A-6B is configured to heat a respective exposed surface (or surfaces) along the air circuit path 156 within and/or proximate the air circuit flow regulator 158. By heating the exposed surfaces with the heating elements 196, the anti-icing system 194 and its heating elements 196 may reduce or prevent ice accumulation on those exposed surfaces. The present disclosure, however, is not limited to such exemplary anti-icing system arrangements. The anti-icing system 194 of FIGS. 5A-6B, for example, may be configured without one or more of the wall heating elements 196A and 196B, without one or more of the body heating elements 196C and 196D, with only a single one of the heating elements 196, etc. Moreover, it is contemplated one or more of the wall heating elements 196A and 196B may project longitudinally to or about the air circuit inlet 160 when, for example, the air circuit flow regulator 158 is spaced downstream from the air circuit inlet 160.

Referring to FIG. 7, the anti-icing system 194 may also include a system controller 198 configured to control operation of the heating elements 196. The system controller 198 may be electrically coupled between (a) the aircraft electrical system 104 and its electrical distribution bus 126 and (b) the heating elements 196. The system controller 198 of FIG. 7, for example, is electrically coupled to the heating elements 196 through one or more electric cables 200 (collectively schematically shown); e.g., high voltage electric cables, low voltage electric cables, power feeder cables, etc. This system controller 198 is also electrically coupled to the electrical distribution bus 126 through one or more electric cables 202 (collectively schematically shown); e.g., high voltage electric cables, low voltage electric cables, power feeder cables, etc. With this arrangement, the system controller 198 may selectively direct a current of electricity received from the electrical distribution bus 126 to one or more or all of the heating elements 196. This electricity received from the electrical distribution bus 126 may be output from the electric machine 106 (e.g., during the generator mode of operation), the power source 134, the power storage 136 and/or otherwise. Of course, in other embodiments, it is contemplated the electricity used by the anti-icing system 194 may be generated by or otherwise output from one or more other electrical power supplies.

In some embodiments, the system controller 198 may control operation of the heating elements 196 based on input from an operator, such as activation (e.g., turn on) or deactivation (e.g., turn off) of an anti-ice switch. In some embodiments, the system controller 198 may control operation of the heating elements 196 based on sensor data received from a sensor system 204. This sensor data may be indicative of a temperature of the bypass air and/or a monitored temperature of the system air circuit 146 at the air circuit inlet 160 (see FIG. 3) and/or at the air circuit flow regulator 158 (see FIG. 3). For example, where the monitored temperature is equal to or below a threshold temperature, the system controller 198 may direct (or increase) electricity to one or more of the heating elements 196. By contrast, where the monitored temperature is above the threshold temperature, the system controller 198 may stop (or reduce) the flow of electricity to one or more of the heating elements 196.

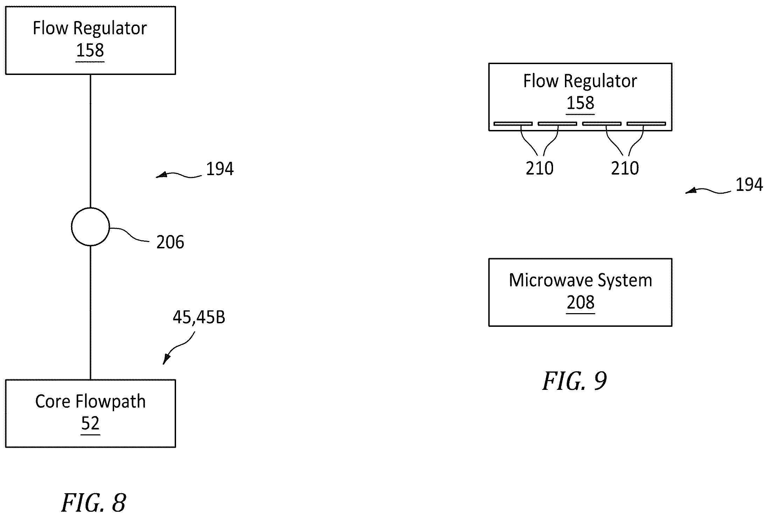

While the anti-icing system 194 is described above as an electrical anti-icing system, the present disclosure is not limited thereto. For example, referring to FIG. 8, the anti-icing system 194 may alternatively be configured to direct heated air to the air circuit flow regulator 158 to heat similar regions and/or members of the air circuit flow regulator 158 as described above with respect to the arrangements of FIGS. 5A-6B. This heated air may be pressurized air bled from the core flowpath 52, for example within the compressor section 45 and, more specifically, within the HPC section 45B or otherwise upstream of the combustor 98 (see FIG. 1). This flow of the bleed air may be regulated by a control valve 206. In another example, referring to FIG. 9, the anti-icing system 194 may still alternatively be configured to direct microwaves generated by a microwave system 208 to one or more susceptors 210 at locations similar to those of the heating element locations described above with respect to the arrangements of FIGS. 5A-6B. Here, the microwaves may impinge against and may be absorbed by the susceptors 210, where the susceptors 210 may transform those microwaves into thermal energy. Various types of microwave systems and susceptors are known in the art, and the present disclosure is not limited to any particularly types thereof.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. An assembly for an aircraft powerplant (20), comprising:
a powerplant component (106; 108; 142);
a fluid system (36) including a fluid circuit (144), an air circuit (146) and a heat exchanger (148), the fluid circuit (144) extending through the heat exchanger (148) and configured to service the powerplant component (106; 108; 142) using a working fluid, the air circuit (146) including a circuit inlet (160), a circuit outlet (162) and a flow regulator (158), the air circuit (146) extending through the heat exchanger (148) from the circuit inlet (160) to the circuit outlet (162), the flow regulator (158) configured to regulate a flow of air received by the air circuit (146) through the circuit inlet (160) and directed to the heat exchanger (148), and the heat exchanger (148) configured to transfer heat energy from the working fluid flowing in the fluid circuit (144) into the flow of air in the air circuit (146); and
an anti-icing system (194) configured to heat the flow regulator (158) to reduce or prevent ice accumulation at the flow regulator (158).

2. The assembly of claim 1, wherein the flow regulator (158) is disposed at the circuit inlet (160).

3. The assembly of claim 1, wherein the flow regulator (158) is disposed between and spaced from the circuit inlet (160) and the heat exchanger (148) along the air circuit (146).

4. The assembly of any preceding claim, wherein:
the air circuit (146) further includes a circuit path (156), and the circuit path (156) extends longitudinally through the flow regulator (158) and the heat exchanger (148);
the flow regulator (158) includes a regulator wall (172A; 172B) and a regulator body (174), the regulator wall (172A; 172B) forms a peripheral boundary of the circuit path (156) at the flow regulator (158), and the regulator body (174) is configured to move relative to the regulator wall (172A; 172B) to regulate the flow of air through the flow regulator (158); and
the anti-icing system (194) is configured to heat at least one of the regulator wall (172A; 172B) or the regulator body (174).

5. The assembly of claim 4, wherein the regulator body (174) is configured to translate along an axis (176); or wherein the regulator body (174) is configured to pivot about an axis (176).

6. The assembly of any preceding claim, wherein:
the anti-icing system (194) comprises one or more electric heating elements (196A-D); and
the anti-icing system (194) is configured to heat the flow regulator (158) using the one or more electric heating elements (196A-D).

7. The assembly of claim 6, further comprising an electric machine (106) configurable as at least an electric generator during a generator mode of operation, the electric machine (106) configured to electrically power at least one of the one or more electric heating elements (196A-D) during the generator mode of operation.

8. The assembly of claim 7, wherein:
the electric machine (106) comprises the powerplant component (106; 142) serviced by the fluid circuit (144); or
the assembly further comprises an electric machine controller (108) configured to control operation of the electric machine (106), the electric machine controller (108) comprising the powerplant component (108; 142) serviced by the fluid circuit (144).

9. The assembly of any preceding claim, further comprising:
a compressor section (45);
a combustor section (46) comprising a combustor (98);
a turbine section (47); and
a flowpath (52) extending through the compressor section (45), the combustor section (46) and the turbine section (47);
the anti-icing system (194) configured to heat the flow regulator (158) using core air bled from the flowpath (52) upstream of the combustor (98).

10. The assembly of any preceding claim, wherein:
the anti-icing system (194) comprises a microwave system (208); and
the anti-icing system (194) is configured to heat the flow regulator (158) using the microwave system (208).

11. The assembly of any of claims 1 to 6, further comprising:
a turbine engine (24) comprising a rotating structure (72A; 72B);
an electric machine (106) operatively coupled to the rotating structure (72A; 72B); and
an electric machine controller (108) configured to control operation of the electric machine (106);
wherein the turbine engine (24) or the electric machine controller (108) comprises the powerplant component (106; 108; 142) serviced by the fluid system (36).

12. The assembly of any of claims 1 to 8, further comprising:
a compressor section (45);
a combustor section (46);
a turbine section (47);
a core flowpath (52) extending through the compressor section (45), the combustor section (46) and the turbine section (47); and
a bypass flowpath (54) bypassing the compressor section (45), the combustor section (46) and the turbine section (47);
the circuit inlet (160) fluidly coupling the air circuit (146) to the bypass flowpath (54), optionally wherein the assembly further comprises:
a vane structure (166) extending across the bypass flowpath (54), wherein at least one of the circuit inlet (160) or the circuit outlet (162) is arranged with the vane structure (166).

13. The assembly of any preceding claim, wherein the fluid circuit (144) is configured to cool and/or lubricate the powerplant component (106; 108; 142) using the working fluid.

14. An assembly for an aircraft powerplant (20), comprising:
a compressor section (45);
a combustor section (46);
a turbine section (47);
a core flowpath (52) extending through the compressor section (45), the combustor section (46) and the turbine section (47);
a bypass flowpath (54) bypassing the compressor section (45), the combustor section (46) and the turbine section (47);
an air circuit (146) including a circuit inlet (160), a circuit outlet (162), a circuit path (156) and a flow regulator (158), the circuit inlet fluidly coupling the circuit path (156) to the bypass flowpath (54), the circuit path (156) extending through the flow regulator (158) from the circuit inlet (160) to the circuit outlet (162), and the flow regulator (158) configured to regulate a flow of air received from the bypass flowpath (54) through the circuit inlet (160) and directed through the circuit path (156) to the circuit outlet (162); and
an anti-icing system (194) configured to heat the flow regulator (158),
optionally wherein:
the assembly further comprises a heat exchanger (148), wherein the circuit path (156) extends through the heat exchanger (148) with the heat exchanger (148) disposed along the circuit path (156) between the flow regulator (158) and the circuit outlet (160); and/or
wherein the assembly further comprises a bifurcation structure (166) extending across the bypass flowpath (54), wherein the circuit inlet (160) is arranged in an exterior of the bifurcation structure (166).

15. An assembly for an aircraft powerplant (20), comprising:
an air circuit (146) including a circuit inlet (160), a circuit outlet (162), a circuit path (156) and a flow regulator (158), the circuit path (156) extending through the flow regulator (158) from the circuit inlet (160) to the circuit outlet (162), the flow regulator (158) configured to regulate a flow of air received through the circuit inlet (160) and directed through the circuit path (156) to the circuit outlet (162), the flow regulator (158) including a regulator wall (172A; 172B) and a regulator body (174), the regulator wall (172A; 172B) forming a peripheral boundary of the circuit path (156) through the flow regulator (158), and the regulator body (174) configured to move relative to the regulator wall (172A; 172B) to regulate the flow of air through the flow regulator (158); and
an anti-icing system (194) configured to heat the regulator wall (172A; 172B) and/or the regulator body (174) to reduce or prevent ice accumulation (194) in the air circuit (146) at the flow regulator (158).
